# EUROPÄISCHE PATENTSCHRIFT

(11) **EP 3 453 547 B1**
(45) Veröffentlichungstag und Bekanntmachung des Hinweises auf die Patenterteilung: **01.01.2020**
(21) Anmeldenummer: 17190182.0
(22) Anmeldetag: 08.09.2017
(51) Int. Cl.: B60J 7/10, B60J 5/06

(54) **SEITENPLANENSPANNER**
SIDE TARPAULIN TENSIONER
TENDEUR DE BÂCHE LATÉRALE

(43) Veröffentlichungstag der Anmeldung: 13.03.2019
(73) Patentinhaber: Franz Miederhoff oHG, 59846 Sundern (DE)
(72) Erfinder: Papenheim, Josef, 59846 Sundern (DE)
(74) Vertreter: Patentanwälte Dörner & Kötter PartG mbB

(56) Entgegenhaltungen:
- WO-A1-2016/205852
- DE-U1- 20 210 880
- DE-U1- 20 310 148

## Beschreibung

Die Erfindung betrifft einen Seitenplanenspanner, insbesondere zum Spannen von Planen eines Nutzfahrzeugaufbaus, nach dem Oberbegriff des Patentanspruchs 1.

In der EP 1 043 183 B1 ist ein Seitenspanner beschrieben, bestehend aus einem U-förmigen Spannhebel, der über einen Schwenkbolzen schwenkbar mit einem Grundkörper verbunden ist. Der Schwenkbolzen ist in einem zylindrischen Bolzen gelagert, dessen Radius größer ist, als der Radius der Seitenwangen des Spannhebels und dient der Anlage an einem Rahmenprofil eines Nutzfahrzeugaufbaus. In die Mantelfläche des Bolzens ist eine Gewindestange eingeschraubt, die mit einer Kontermutter festgesetzt ist. Die Gewindestange steht mit ihrem anderen Ende mit einem an der Plane des Nutzfahrzeugs befestigten mit einem Innengewinde versehenen Block im Eingriff, der wiederum an der Plane unter Einsatz einer Gegenplatte befestigt ist. An dem Spannhebel ist weiterhin ein Haken über Lagerstifte schwenkbar befestigt. Der Haken kann hinter einem Schenkel des Rahmenprofils des Nutzfahrzeuges eingehängt werden und dient als Widerlager. In seiner offenen Stellung befindet sich der Spannhebel in einer vollständig geschwenkten Stellung. In dieser Stellung wird der Haken an einem Schenkel des Rahmenprofils eingehängt. Beim Schließen des Spannhebels erfolgt eine gegeneinander gerichtete Relativbewegung zwischen dem an dem Spannhebel angelenkten Haken und dem mit der Gewindestange verbundenen, an der Plane befestigten Block, so dass die Plane im Zuge dieser Bewegung gespannt wird. Ein gattungsgemäßer Seitenspanner ist weiterhin in der DE 203 10 148 U1 und der DE 202 10 880 U1 offenbart.

Der vorstehende Seitenplanenspanner hat sich in der Praxis bewährt. Es hat sich jedoch gezeigt, dass die Montage dieses Seitenplanenspanners vergleichsweise aufwändig ist. Vor diesem Hintergrund liegt der Erfindung die Aufgabe zu Grunde, einen Seitenplanenspanner bereitzustellen, dessen Montageaufwand verringert ist. Gemäß dieser Erfindung wird diese Auflage durch einen Seitenplanenspanner mit den Merkmalen des kennzeichnenden Teils des Patentanspruchs 1 gelöst.

Mit der Erfindung ist ein Seitenplanenspanner bereitgestellt, dessen Montageaufwand gegenüber dem Stand der Technik verringert ist. Dadurch, dass die Mittel zur Übertragung der durch den Spannbügel ausgeübten Spannenbewegung auf die Plane eine an der Grundplatte des Grundkörpers befestigte Gewindebolzen-Mutter-Kombination umfasst, deren Gewindebolzen durch eine Durchführung eines Haltestücks durchführbar ist, das an der zu spannenden Plane festlegbar ist, erübrigt sich die Ansatzschraube mit der hohlzylindrischen Bolzenaufnahme. Hierdurch ist zudem eine flachere Bauweise ermöglicht.

Die Gewindebolzen-Muttern-Kombination umfasst eine an den Grundkörper befestigte Mutter, in die der Gewindebolzen einer Schraube, die zuvor durch die Durchführung eines Haltestücks hindurchführbar ist, eingeschraubt ist. Dabei ist die Mutter als Bördelmutter ausgebildet, die so einfach an einer lotrecht zum Grundkörper an dieser befestigten Lasche montierbar ist.

Das Haltestück ist ein Winkel, dessen erster Schenkel die Durchführung aufweist und dessen rechtwinklig zu diesem angestellter zweiter Schenkel wenigstens zwei Bohrungen zur Aufnahme von Befestigungsmitteln zur Festlegung einer Plane aufweist. Hierdurch ist eine einfache Befestigung des Haltestücks, beispielsweise mittels Nieten an einer Plane ermöglicht. Zudem ermöglicht ein solcher Winkel ein lotrechtes Verspannen der mit dieser verbundenen Plane.

Die Durchführung umgebend ist eine Einsenkung zur Aufnahme des Hammerkopfes der Hammerkopfschraube angeordnet. Hierdurch ist ein Verdrehen der Schraube, die in diese Einsenkung eingreift, entgegengewirkt.

In Weiterbildung der Erfindung weist der Spannbügel zwei parallel zueinander angeordnete, an seiner Deckplatte angeformte Seitenflügel auf, in die jeweils zwei zueinander fluchtende Bohrungen zur Aufnahme der ersten und der zweiten Schwenkachse eingebracht sind. Dabei ist vorteilhaft an wenigstens einen, bevorzugt jedoch an beiden Seitenflügeln eine Nase angeformt, wobei an dem Grundkörper wenigstens eine Federzunge angeformt ist, welche die Nase in angelegter Position des Spannbügels hintergreift. Hierdurch ist eine zusätzliche Sicherung des Haltebügels in der gespannten, geschlossenen Position erzielt.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

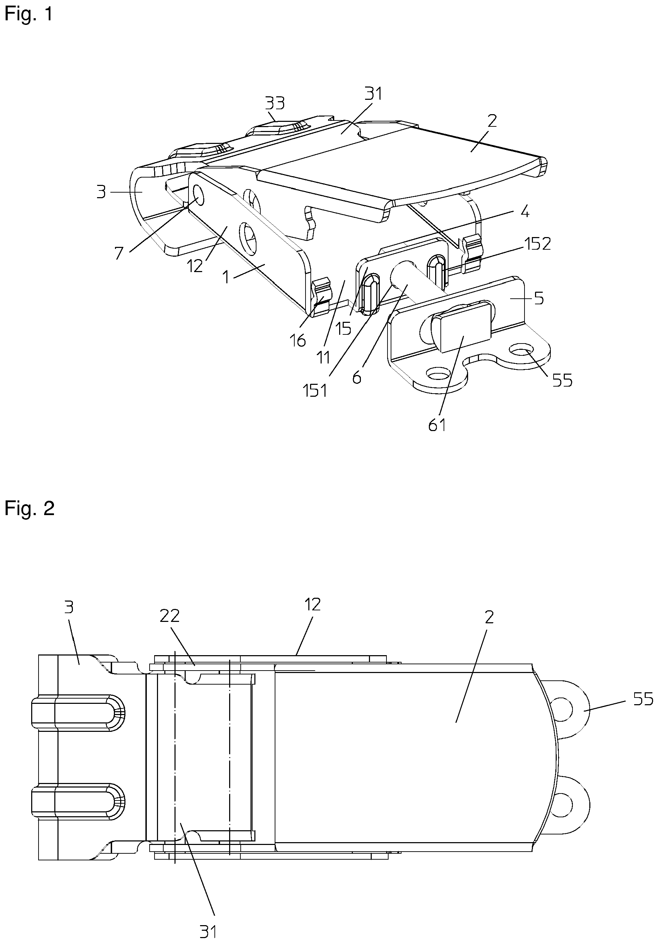

- Figur 1: die schematische räumliche Darstellung eines Seitenplanenspanners;
- Figur 2: die Darstellung des Seitenplanenspanners aus Figur 1 in der Draufsicht;

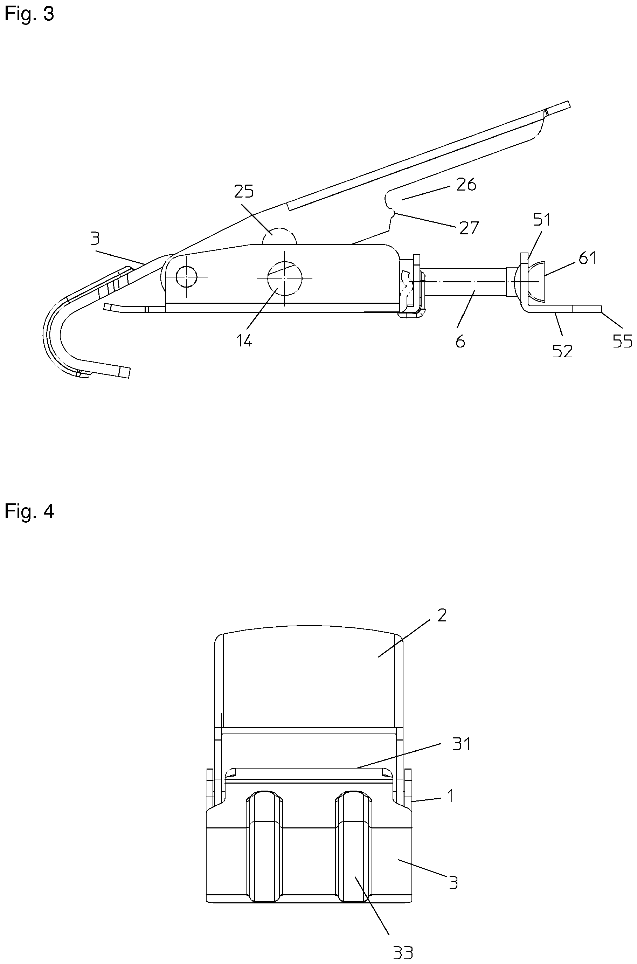

- Figur 3: die Darstellung des Seitenplanenspanners aus Figur 1 in der Seitenansicht;
- Figur 4: die Darstellung des Seitenplanenspanners aus Figur 1 in der Ansicht von hinten;

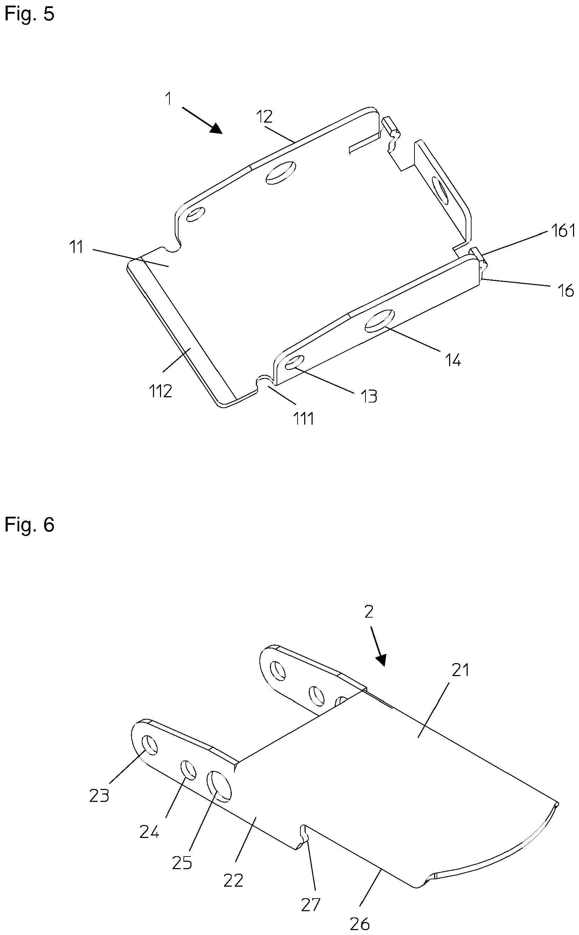

- Figur 5: die räumliche Darstellung des Grundkörpers des Seitenplanenspanners aus Figur 1;
- Figur 6: die räumliche Darstellung des Spannbügels des Seitenplanenspanners aus Figur 1 und

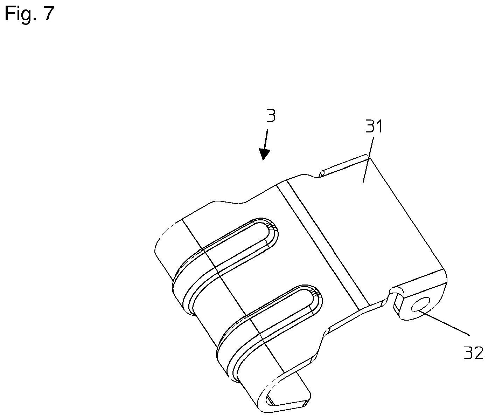

- Figur 7: die räumliche Darstellung des Hakens des Seitenplanenspanners aus Figur 1;

Der als Ausführungsbeispiel gewählte Seitenplanenspanner besteht im Wesentlichen aus einem Grundkörper 1, in dem der Spannbügel 2 schwenkbar gelagert ist, der wiederum schwenkbar mit einem Haken 3 verbunden ist. An dem Grundkörper 1 ist eine Bördelmutter 4 befestigt, die eine Hammerkopfschraube 6 aufnimmt, die durch die Durchführung eines Planenwinkels 5 geführt ist.

Der Grundkörper 1 ist im Ausführungsbeispiel als Blechstanzbiegeteil ausgebildet. Er besteht im Wesentlichen aus einer Grundplatte 11, an dessen beiden Längsseiten jeweils eine Seitenwange 12 rechtwinklig angestellt ist. In den Seitenwangen 12 ist jeweils eine erste Bohrung 13 sowie eine beabstandet zu dieser angeordnete Verplombungsbohrung 14 eingebracht. Die fluchtend zueinander angeordneten ersten Bohrungen 13 dienen der Aufnahme eines Achsbolzens 7 zur schwenkbaren Lagerung des Spannbügels 2. Die Grundplatte 11 ragt über die Seitenwangen 12 hinaus, wobei angrenzend an die Seitenwangen 12 in die Grundplatte 11 beidseitig ein Freischnitt 111 eingebracht ist. Der hierdurch begrenzte, auskragende Verklemmsteg 112 unterstützt die Verklemmung des S- Schlages der zu spannenden Plane über den Haken 3.

An ihrem dem Verklemmsteg 112 gegenüberliegenden Ende ist an die Grundplatte 11 eine rechtwinklig abgewinkelte Lasche 15 angeformt, die mittig mit einer Bohrung 151 versehen ist. Durch die Bohrung 151 ist der Bördelkragen einer Bördelmutter 4 geführt, die sodann verbördelt ist, wodurch die Bördelmutter 4 an der dem Verklemmsteg 112 zugewandten Seite der Lasche 15 befestigt ist. Zur Stabilisierung der Lasche 15 ist diese mit Sicken 152 versehen. Beidseitig der Lasche 15 ist weiterhin an die Grundplatte 11 jeweils eine Federzunge 16 angeformt, die endseitig einen im Wesentlichen S-förmigen Rastabschnitt 161 aufweist.

Der Spannbügel 2 besteht im Wesentlichen aus einer Deckplatte 21, die an ihren beiden Längsseiten mit rechtwinklig zu dieser angestellten Seitenflügeln 22 versehen ist, welche die Deckplatte 21 in ihrer Länge überragen. In dem die Deckplatte 21 überragenden Abschnitt der Seitenflügel 22 ist in diese jeweils endseitig eine erste Bohrung 23 sowie beabstandet zu dieser eine zweite Bohrung 24 eingebracht. Weiterhin ist wiederum beabstandet zur zweiten Bohrung 24 eine Verplombungsbohrung 25 in den Seitenflügel 22 angeordnet. Im Bereich der Deckplatte 21 sind die Seitenflügel 22 etwa in Höhe eines Viertels der Deckplatte 21 schmaler ausgebildet, wodurch ein Absatz 26 gebildet ist. Etwa mittig des Absatzes 26 ist an diesen eine auskragende Nase 27 angeformt. Die Ausformung der Nasen 27 entspricht im Wesentlichen der Ausformung des Rastabschnitts 161 der Federzungen 16.

Der Haken 3 ist im Wesentlichen in Form eines gekrümmten Blechstreifens ausgebildet, der an einem Ende in einem Flanschabschnitt 31 übergeht. Der Flanschabschnitt 31 ist im Wesentlichen eben ausgebildet und an seinen Längsseiten mit rechtwinklig nach innen angestellten Ösen 32 versehen. Zur Stabilisierung des Hakens 3 ist dieser an der Außenseite seines gekrümmten Bereichs mit Sicken 33 versehen.

Der Spannbügel 2 ist derart in dem Grundkörper 1 eingebracht, dass dessen Seitenflügel 22 innen an den Seitenwangen 12 des Grundkörpers 1 anliegen, wobei durch die miteinander fluchtenden ersten Bohrungen 13, 23 der Seitenwangen 12 sowie der Seitenflügel 22 ein Achsbolzen 7 geführt ist. Der Achsbolzen 7 bildet die Schwenkachse, um welche der Spannbügel 2 relativ zum Grundkörper 1 verschwenkbar ist. Alternativ ist auch eine schwenkbare Lagerung über durch die ersten Bohrungen 13, 23 geführte Nieten möglich. Der Spannbügel 2 ist somit derart in den Grundkörper 1 positioniert, dass bei einem Verschwenken des Spannbügels 2 in Richtung der Lasche 15 (Schließrichtung) die Nasen 27 der Seitenflügel 22 die an dem Grundkörper 1 angeformten Federzungen 16 passieren, deren Rastabschnitte 161 im geschlossenen Zustand des Spannbügels 2 die Nasen 27 vorgespannt hintergreifen. Dabei fluchten die Verplombungsbohrungen 14, 25 vom Grundkörper und Spannbügel, sodass ein Zollverschluss ermöglicht ist. Der Haken 3 ist derart zwischen den Seitenflügeln 22 des Spannbügels 2 angeordnet, dass die Ösen 32 mit den zweiten Bohrungen 24 der Seitenflügel 22 fluchten, wobei durch diese ein weiterer Achsbolzen 7 geführt ist, über den der Haken 3 relativ zum Spannenbügel 2 verschwenkbar gelagert ist.

Durch die Bohrung 151 der Lasche 15 hindurch ist eine Hammerkopfschraube 6 in die Bördelmutter 4 eingeschraubt, die zuvor durch die Durchführung des Planenwinkels 5 hindurchgeführt ist.

Der Planenwinkel 5 ist im Wesentlichen gebildet durch einen ersten Schenkel 51, an dem rechtwinklig ein zweiter Schenkel 52 angeformt ist. Die in dem ersten Schenkel 51 mittig angeordnete Durchführung ist diese umgebend mit einer Einsenkung versehen, welche den Hammerkopf 61 der Hammerkopfschraube 6 aufnimmt. An den zweiten Schenkel 52 sind beabstandet zueinander zwei Ösen 55 angeformt. Die Ösen 55 dienen der Befestigung des Planenwinkels 5 an der Plane eines Nutzfahrzeugs.

## Patentansprüche

1. Seitenplanenspanner, umfassend einen zwei parallele Seitenwangen aufweisenden Grundkörper (1), einen als einarmiger Hebel ausgebildeten Spannbügel, der um eine zwischen den Seitenwangen des Grundkörpers orthogonal zu diesen verlaufende erste Schwenkachse schwenkbar gelagert ist, sowie ein Hakenteil zum Hintergreifen eines gegenüber der zu spannenden Plane als Widerlager dienenden ortsfesten Halteelements, das um eine zwischen den Seitenwangen verlaufende, parallel zur ersten Schwenkachse verlaufende zweiten Schwenkachse schwenkbar gelagert ist, wobei an dem Grundkörper Mittel zur Übertragung der durch den Spannbügel ausgeübten Spannbewegung auf die Plane angeordnet sind, wobei die Mittel zur Übertragung der durch den Spannbügel (2) ausgeübten Spannbewegung auf die Plane eine an dem Grundkörper (1) befestigte Gewindebolzen-Muttern-Kombination (4, 6) umfasst, deren Gewindebolzen (6) durch eine Durchführung eines Haltestücks (5) durchführbar ist, das an der zu spannenden Plane festlegbar ist, **dadurch gekennzeichnet, dass** die Gewindebolzen-Muttern-Kombination eine an dem Grundkörper (1) befestigte Bördelmutter (4) umfasst, in die der Gewindebolzen einer Hammerkopfschraube (6) eingeschraubt ist, wobei das Haltestück ein Winkelstück (5) ist, dessen erster Schenkel (51) die Durchführung aufweist und dessen rechtwinklig zu diesem angestellter zweiter Schenkel (52) wenigstens zwei Bohrungen zur Aufnahme von Befestigungsmitteln zu Festlegung an der Plane aufweist und wobei die Durchführung umgebend eine Einsenkung zur Aufnahme des Hammerkopfes (61) der Hammerkopfschraube (6) angeordnet ist.

2. Seitenplanenspanner nach Anspruch 1, **dadurch gekennzeichnet, dass** die Mutter (4) an einer lotrecht zum Grundkörper (1) an diesem befestigte Lasche (15) befestigt ist.

3. Seitenplanenspanner nach einem der vorgenannten Ansprüche, **dadurch gekennzeichnet, dass** der Spannbügel (2) zwei parallel zueinander angeordnete, an seiner Deckplatte (21) angeformte Seitenflügel (22) aufweist, in die jeweils zwei zueinander fluchtende Bohrungen (23, 24) zur Aufnahme der ersten und der zweiten Schwenkachse eingebracht sind.

4. Seitenplanenspanner nach Anspruch 3, **dadurch gekennzeichnet, dass** an wenigsten einem, bevorzugt an beiden Seitenflügeln (22) eine Nase (27) angeformt ist, wobei an dem Grundkörper wenigstens eine Federzunge (16) angeformt ist, welche die Nase (27) in angelegter Position des Spannbügels (2) hintergreift.

5. Seitenplanenspanner nach einem der Ansprüche 3 oder 4, **dadurch gekennzeichnet, dass** die erste Schwenkachse durch einen ersten Bolzen (7) gebildet ist, der durch zwei zueinander fluchtende Bohrungen (23) der Seitenflügel (22) und zwei mit diesen fluchtende, in den Seitenwangen (12) des Grundkörpers (1) angeordnete Bohrungen (13) geführt ist.

6. Seitenplanenspanner nach einem der Ansprüche 3 bis 5, **dadurch gekennzeichnet, dass** der Haken (3) zwei gegenüberliegend angeordnete Ösen (32) aufweist, und dass die zweite Schwenkachse durch einen zweiten, zu dem ersten Bolzen (7) beabstandet angeordneten Bolzen gebildet ist, der durch zwei zueinander fluchtende Bohrungen (24) der Seitenflügel (22) sowie die mit diesen fluchtenden Ösen (32) des Hakens (3) geführt ist.

## Claims

1. Side tarpaulin tensioner comprising a base body (1) which has two parallel side walls, a clamping bracket designed as a one-armed lever, which is mounted to be pivotable about a first pivot axis running between and orthogonal to the side walls of the base body as well as a hook part for engaging behind a stationary holding element serving as an abutment vis-à-vis the tarpaulin to be tensioned, which is mounted to be pivotable about a second pivot axis which runs between the side walls and runs parallel to the first pivot axis, wherein means for the transmission of the tensioning movement exerted by the clamping bracket to the tarpaulin are arranged at the base body, wherein the means for the transmission of the tensioning movement exerted by the clamping bracket (2) to the tarpaulin comprises a threaded bolt-nut combination (4, 6) attached to the base body (1), whose threaded bolt (6) can be guided through a lead through of a holding piece (5), which can be fixed to the tarpaulin to be tensioned, **characterised in that** the threaded bolt-nut combination comprises a flare nut (4) attached to the base body (1), into which the threaded bolt of a hammer head screw (6) is screwed, wherein the holding piece is an elbow (5), whose first leg (51) comprises the lead through and whose second leg (52) perpendicularly inclined thereto has at least two bores for receiving fasteners for fixing to the tarpaulin and wherein a depression surrounding the lead through for receiving the hammer head (61) of the hammer head screw (6) is arranged.

2. Side tarpaulin tensioner according to claim 1, **characterised in that** the nut (4) is attached to a lug (15) which is mounted on and perpendicular to the base body (1).

3. Side tarpaulin tensioner according to one of the previous claims, **characterised in that** the clamping bracket (2) has two side wings (22) which are arranged in parallel to one another and moulded on its cover plate (21), in which two mutually aligned bores (23, 24), respectively, are inserted for receiving the first and the second pivot axis.

4. Side tarpaulin tensioner according to claim 3, **characterised in that** a nose (27) is moulded on at least one, preferably on both side wings (22), wherein at least one spring tongue (16) is moulded on the base body, which engages behind the nose (27) in an applied position of the clamping bracket (2).

5. Side tarpaulin tensioner according to one of claims 3 or 4, **characterised in that** the first pivot axis is formed by a first bolt (7), which is guided through two mutually aligned (23) bores of the side wings (22) and two bores (13) in alignment therewith and arranged in the side walls (12) of the base body (1).

6. Side tarpaulin tensioner according to one of claims 3 to 5, **characterised in that** the hook (3) has two oppositely arranged eyes (32) and that the second pivot axis is formed by a second bolt arranged at a distance from the first bolt (7), which is guided through two mutually aligned bores (24) of the side wings (22) as well as the eyes (32) of the hook (3) in alignment therewith.

## Revendications

1. Tendeur latéral pour bâche, comprenant un corps de base (1) qui présente deux bords relevés parallèles, un étrier tendeur configuré en simple bras de levier, étrier tendeur qui se trouve en appui pivotant autour d'un premier axe de pivotement dont le tracé est perpendiculaire aux bord relevés du corps de base, ainsi qu'une pièce crochet pénétrant derrière un élément de retenue à demeure servant de palier antagoniste par rapport à la bâche à tendre, élément de retenue qui se trouve en appui pivotant autour d'un deuxième axe de pivotement dont le tracé est parallèle au premier axe de pivotement, sachant que sont disposés contre le corps de base des moyens servant à transmettre à la bâche le mouvement de tensionnement exercé par l'étrier tendeur, sachant que les moyens de transmission du mouvement de tensionnement de bâche exercé par l'étrier tendeur (2) comprennent une combinaison goujon fileté/écrou (6, 4) fixée contre le corps de base (1), combinaison dont le goujon fileté (6) peut être introduit par un passage ménagé dans une pièce de retenue (5) qu'il est possible d'immobiliser contre la bâche à tendre, **caractérisé en ce que** la combinaison goujon fileté/écrou comprend un écrou serti (4) contre le corps de base (1) et dans lequel est vissé le goujon fileté d'un boulon (6) à tête marteau, sachant que la pièce de retenue est une pièce coudée (5) dont le premier pan (51) présente le passage et dont le deuxième pan (52), perpendiculaire au premier, présente au moins deux alésages pour recevoir les moyens de fixation qui serviront à l'immobilisation contre la bâche et sachant qu'est disposé un creux entourant le passage et servant à recevoir la tête marteau (61) du boulon (6) à tête marteau.

2. Tendeur latéral pour bâche selon la revendication 1, **caractérisé en ce que** l'écrou (4) est fixé contre une patte (15) elle-même fixée à l'aplomb du corps de base (1).

3. Tendeur latéral pour bâche selon l'une des revendications précédentes, **caractérisé en ce que** l'étrier tendeur (2) présente deux ailes latérales (22) disposées réciproquement parallèles, modelées contre sa plaque couvercle (21), dans lesquelles deux alésages (23, 24) réciproquement aligné ont été ménagés pour recevoir le premier et le deuxième axe de pivotement.

4. Tendeur latéral pour bâche selon la revendication 3, **caractérisé en ce que** contre au moins une aile latérale, de préférence contre les deux (22), une saillie (27) a été modelée, sachant que contre le corps de base a été modelé au moins une languette ressort (16) qui pénètre derrière la saillie (27) lorsque l'étrier tendeur (2) se trouve en position appliquée.

5. Tendeur latéral pour bâche selon l'une des revendications des 3 ou 4, **caractérisé en ce que** le premier axe de pivotement est formé par un premier goujon (7) introduit dans deux alésages (23) réciproquement alignés des ailes latérales (22) et dans deux alésages (13) alignés sur les précédents et disposés dans les parois latérales (12) du corps de base (1).

6. Tendeur latéral pour bâche selon l'une des revendications 3 à 5, **caractérisé en ce que** le crochet (3) présente deux œillets (32) disposés l'un en face de l'autre, et **en ce que** le deuxième axe de pivotement est formé par un deuxième goujon situé à distance du premier goujon (7) et guidé par deux alésages (24) réciproquement alignés des ailes latérales (22) ainsi que par les œillets (32) du crochet (3) alignés sur ces alésages.
